# EUROPEAN PATENT APPLICATION

(11) **EP 4 039 141 A1**
(43) Date of publication of application: **10.08.2022**
(21) Application number: 21155762.4
(22) Date of filing: 08.02.2021
(51) Int. Cl.: A47J 43/06, A47J 43/08

(54) **BASE COMPONENT AND ATTACHMENT FOR A HOUSEHOLD APPLIANCE, AND HOUSEHOLD APPLIANCE WITH BASE COMPONENT AND ATTACHMENT**

(71) Applicant: BSH Hausgeräte GmbH, 81739 München (DE)
(72) Inventor: Blatnik, Gregor, 2381 Podgorje (SI); Golavsek, Samo, 3312 Prebold (SI); Pacnik, Roman, 2383 Smartno pri Slovenj Gradcu (SI)

(57) **Abstract**

Disclosed is a base component 10 of a household appliance 100. The base component is configured to be detachably combined with at least one attachment 20, and to actuate the attachment when combined therewith. It comprises at least one transfer element 14 configured to be at least partially moved by the attachment when this is being combined with the base component 10, and a detection unit 15 configured to detect a respective movement of the at least one transfer element 14.

Further disclosed are an attachment 20 for detachable combination with a base component 10 of a household appliance 100. At least one surface and/or edge 22 of the attachment has a profile configured to engage with a movable element 14 of the base component, so as to cause a movement thereof when the attachment is being combined with the base portion.

Moreover, a household appliance 100 is disclosed.

## Description

The present invention concerns a base component for a household appliance, an attachment for a household appliance, and a household appliance with a base component and an attachment.

Household appliances, in particular kitchen appliances may comprise a base component and at least one attachment to be detachably combined with the base component. Therein, an operation of the base component may be adjustable to the respective attachment. To perform the adjustment, a manual regulation by a user is typically required.

It is an object of the present invention to develop a technique facilitating provision of an improved household appliance.

The object is solved by a base component according to claim 1, by an attachment according to claim 8, and by a household appliance according to claim 10. Advantageous embodiments are disclosed in the dependent claims, the description and the figure.

A base component according to the present invention is a component of a household appliance and configured (thus, adapted) to be detachably combined with at least one attachment of the household appliance.

The base component is configured (thus, adapted) to actuate the at least one attachment when combined therewith, preferably responsive to user action (e.g., when switched on).

Actuating the attachment may comprise driving, heating, enabling and/or disabling a respective element the attachment may comprise, such as a tool, a heater element, a pump, or another electric or electronic component, for instance.

Moreover, the base component according to the present invention comprises at least one moveable transfer element configured to be moved (relative to another constituent of the base component, such as relative to a housing or to a framework of the base component) by the attachment when this is being combined with the base component. In particular, to effect said moving, the transfer element may be configured to interact (for example, engage) with a profile in a surface and/or edge of the attachment. The movement of the (preferably mechanical) transfer element may comprise a linear shift, a rotation, and/or a pivoting, for example.

A detection unit further comprised by the base component is configured to detect a respective movement (occurring when the attachment is being combined with the base component) of the at least one transfer element.

To facilitate the (respective) combining, a base component according to the present invention may comprise one or various joint portion/s configured to be connected, for combination of the base portion with the attachment, with a respective joint part of the attachment. The joint portion/s may in particular comprise at least one force-fitting coupling and/or at least one form-fitting coupling, such as at least one screw coupling, at least one bayonet joint, and/or at least one latching mechanism, for example. The detachable combination (with the attachment) the base component is configured (thus, adapted) to may comprise a linear and/or rotational shift, and/or a pivoting movement, respectively, of the attachment relative to a/the constituent (such as a/the housing, framework or other structure) of the base component.

Such joint portion may have an orifice configured to receive a respective joint part of the attachment. According to particular embodiments of the present invention, at least a part of the transfer element is arranged within such orifice.

An attachment according to the present invention is a component of a household appliance and configured to be detachably combined with a base component of the household appliance, in particular with a base component according to an embodiment of the present invention. A surface and/or an edge of the attachment have/has a profile adapted to engage with a/the moveable element (in paticular, a movable transfer element) of the base component, so as to cause a movement of the movable element (relative to another constituent of the base component, such as relative to a housing or to a framework of the base component) when the attachment is being combined with the base portion. The movement of the movable element (caused by the profile) may comprise a linear shift, a rotation, and/or a pivoting of the transfer element.

The profile may include one or more profile element(s), such as at least one protrusion (e.g., pin), hole, cavity, indent, bulge, and/or thinning. In particular, the profile may at least partially be arranged in a region (of the attachment) which is devised to be inserted, for combination of the attachment to the base component, into an orifice of the base component, in particular into an orifice of a joint portion of the base component.

To facilitate the (respective) combining, an attachent according to the present invention may comprise at least one joint part configured to be connected, for combination of the attachment with the base portion, with a respective joint portion of the base portion. The at least one joint part may in particular comprise at least one force-fitting coupling and/or at least one form-fitting coupling, such as at least one screw coupling, at least one bayonet joint, and/or at least one latching mechanism, for example. The detachable combination (with the base component) the attachment is configured (thus, adapted) to may comprise a linear and/or rotational shift, and/or a pivoting movement, respectively, of the attachment relative to a/the constituent (such as a/the housing, framework or other structure) of the base component.

At least a part of the profile may advantageously be arranged on a surface and/or edge of such at least one joint part.

For combining the attachment with the base portion, the at least one joint part may be configured to be inserted into an orifice of a respective joint portion of the base portion.

The movement of the movable element may be caused by transmitting a motion performed to combine the attachment with the base component. For example, the profile may be configured to push or pull the movable element when the attachment is being combined to the base component.

A household appliance according to the present invention comprises a base component according to an embodiment of the present invention. Moreover, the household appliance comprises an attachment according to an embodiment of the present invention, or even an attachment set according to an embodiment of the present invention (as detailed below), wherein the respective attachment/s is/are combinable with the base component.

The present invention thus provides a technique enabling a base component of a household appliance to automatically react to a respective state thereof: Indeed, the detected movement of the transfer element indicates the presence of the attachment. Therefore, the detection unit of the base component may preferably determine that an attachment is combined with the base component if the detection unit detects said movement. As compared to other solutions for detecting attachments, the present invention provides a simple and robust electro-mechanical system facilitating an automatic recognition of a respective attachment.

The household appliance may, in particular, be a kitchen appliance or a cleaning appliance, for instance. It may comprise a hand blender, a stick blender, a food processor, a mixer, a vacuum sealer, a pump device or a vacuum cleaner, for instance.

According to advantageous embodiments of the present invention, the base component may comprise a drive unit such as an electric motor.

The base component may comprise a clutch component configured to be coupled with a respective clutch element of the attachment when this is combined with the base component. In particular, if the attachment comprises a tool (such as a drill, an agitator or a cutting unit, for instance), the tool may be coupled to the base component, in particular to a drive unit preferably comprised thereof, by means of such clutch. In this way, the base component may be configured to actuate the attachment by driving the tool when the base component is combined with the attachment.

Additionally or alternatively, the base component may comprise at least one electric plug and/or electric plug socket, and/or a line system (e.g., of a vacuum pump the base component may comprise) configured to be connected with a respective element of the attachment when combined therewith.

The detection unit may preferably comprise at least one potentiometer, at least one linear variable differential transformer (LVDT) sensor, at least one inductive sensor, at least one capacitive sensor and/or at least one optical sensor.

According to advantageous embodiments, the detection unit comprises one or more switch/es (in particular an array of switches) configured to be activated by the at least one transfer element when this is moving (in particular due to the base component being combined with the attachment).

Preferably, the base component comprises an electronics configured to control an operation of the base component and, therewith, how the attachment is respectively actuated. A microcontroller preferably comprised by the base component, in particular of such electronics, may be configured to receive (in particular, to read out) a respective movement detected by the detection unit, and to control the attachment's actuation (preferably automatically when switched on) based on the detected movement, preferably in accordance with a respective program stored in the microcontroller.

The detection unit may preferably at least partially be mounted to such microcontroller, at least partially placed on a dedicated printed circuit board and/or at least partially moulded into plastic.

According to advantageous embodiments, the base component according to the present invention comprises a return mechanism configured to return the transfer element to a default position when the at least one attachment is detached from the base component. The transfer element may comprise at least one elastic element, which may at least partially be made of a metal or a plastic. In particular, the elastic element may comprise at least one spring, such as a compression spring, and/or a torsion spring.

In particular embodiments, the return mechanism may be integrated in the detection unit. For example, in embodiments, in which the detection unit comprises one or more switch/es (as mentioned above), the return mechanism may be integrated in such switch.

According to advantageous embodiments, the detection unit is configured to distinguish at least two different movements of the at least one transfer element, such as at least two types, at least two directions, at least two extents and/or at least two velocities of respective movements of the at least one transfer element.

The base component according to the present invention may advantageously be configured to actuate the at least one attachment, when combined therewith (and when operated by a user, e.g., when switched on), based on a respectively detected movement. In particular, the base component may be configured to (preferably automatically) establish at least one parameter of operation based on the detected movement. For instance, a respective mode of operation, a performance, a power, a speed, and/or a time may be automatically adjusted to the respective attachment currently combined with the base component. The attachment thus may have automatic programs intrinsically included, the devised execution of which (by the base component actuating the attachment) may automatically be triggered by the combination of the base component with the attachment. Thereby, an advantageous operation of the household appliance (such as, in respective embodiments, an optimised food preparation, for instance) may be automatically achieved. Moreover, the automatic adjustment may protect the attachment against operation with parameters which are disadvantageous for the particular attachment.

According to advantageous embodiments of the present invention, the attachment is adapted to be combined, with the base component, in a respectively selected one of two or more possible orientations relative to the base component. For example, the attachment may be combinable, dependent on a user's selection, either in a first orientation relative to the base component, or after being rotated (about an axis) into a second orientation relative to the base component.

Therein, at least two of the orientations may entail (due to the profile in the attachment's surface and/or edge) identical (thus, each the same) movements of the movable element (e.g., of the movable transfer element). In this case, an appropriate base component (according to an embodiment of the present invention) may be configured to actuate the attachment independent of a respective one of said at least two orientations in which the attachment is combined with the base component.

Additionally or alternatively, at least two of the orientations may entail (due to the profile in the attachment's surface and/or edge) different movements of the movable element (e.g., of the movable transfer element), which different movements may preferably be detected and distinguished by the detection unit. For instance, the movements may differ from each other in their type, their direction, their extent and/or their velocity. The base component may then be configured to (preferably automatically) actuate the attachment dependent on the respectively caused (and detected) movement of the transfer element - and thus on a respective orientation in which the attachment is combined with the base component.

For example, in a/the first orientation relative to the base component, a first profile element of the profile may be configured to engage with the movable (transfer) element of the base component, and in a/the second orientation, a second profile element may be configured to engage with the movable (transfer) element, wherein the first and second profile elements may have different shapes and/or extensions, so as to cause said different movements of the transfer element.

As a consequence, the attachment may provide various functions (such as operation modes, performances, powers, speeds, and/or operation times), which may be selectable (by a user) by choosing a respective orientation for combining the attachment with the base component. As a particular example, a manual mode on the one hand and an automatic mode on the other may be thus selectable.

As a specific example, the attachment may comprise a rotatable tool (e.g., of a blender) and be combinable with the base component in different rotational positions with respect to the axis of rotation of said tool. For instance, the rotational positions may differ from each other by rotation about 180°, 120° or 90°. Stated differently, a rotation of the attachment with respect to said axis of rotation and about 180°, 120° or 90° may map a first orientation of the attachment relative to the base component to a second orientation of the attachment relative to the base component. Respective profile elements having different shapes and/or extensions may then be configured to engage with the movable element (e.g., the movable transfer element) in the respective orientation, and cause different movements thereof. Therein, the movements may differ from each other in their type, their direction, their extent and/or their velocity, for example.

An attachment set according to the present invention comprises at least two attachments, at least a first one of which is in accordance with an embodiment of the present invention.

A second one of the attachments may be configured to keep the movable element (in particular, the movable transfer element) of the base component fix when being combined with the base component. In particular, the attachment set may comprise both an attachment according to an embodiment of the present invention and a conventional attachment.

A household appliance comprising such attachment set may preferably further comprise a base component configured to adjust its operation (thus, its actuation of a respective one of the first or the second attachment being combined with the base component (if any)) based on whether (or not) a movement of the movable (transfer) element is/has been detected.

Additionally or alternatively, the attachment set may comprise at least one second attachment also being in accordance with an embodiment of the present invention. Preferably, this second attachment may then have a surface and/or edge with a profile configured to cause a different movement of the movable element (e.g., of the movable transfer element) than the profile of the first one of the attachments. The movements may differ from each other in their type, their direction, their extent and/or their velocity, for example.

A household appliance comprising such attachment set may preferably further comprise a base component with a detection unit configured to distinguish the different movements. In particular, the base component may be configured to (automatically) adjust its operation to a respectively detected movement - and therewith to a respective one of the first or the second attachment which is combined with the base component (if any).

In the following, preferred embodiments of the present invention are explained with respect to an accompanying drawing. As is to be understood, the various elements and components are depicted as examples only, may be facultative and/or combined in a manner different than that depicted.

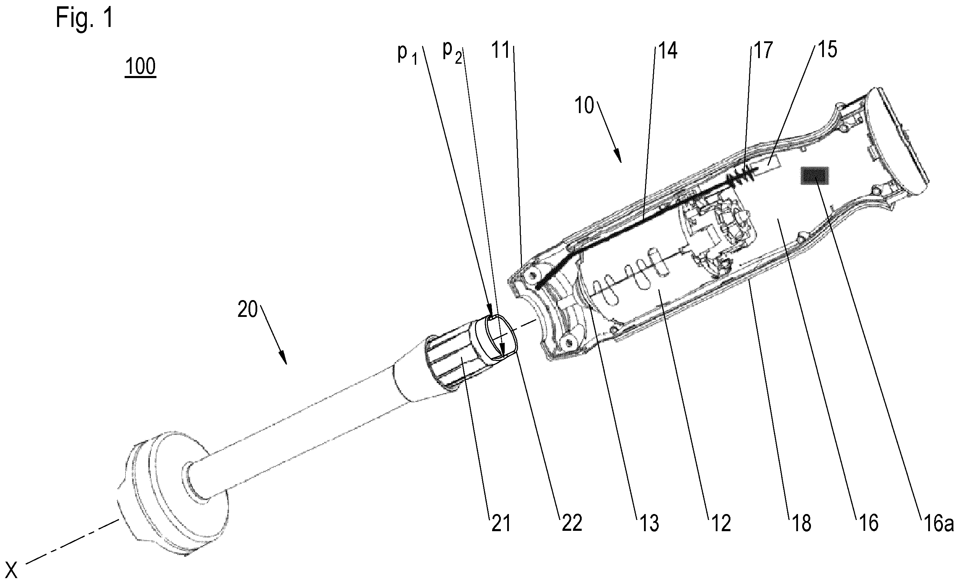

Shown is schematically in
- Fig. 1:: an exemplary embodiment of a household appliance according to the present invention.

In Figure 1, a household appliance 100 according to an exemplary embodiment of the present invention is depicted, wherein the household appliance 100 in this case is a hand blender.

The household appliance 100 comprises a base component 10 and an attachment 20, each according to a respective exemplary embodiment of the present invention. In the figure, the attachment 20 is shown in a perspective view, whereas for explanation purposes, the representation of the base component 10 is a sectional view providing an insight into an inner space enclosed by a housing 18 of the base component 10.

The base component 10 comprises a joint portion 11 facilitating a combination of the base component 10 with the attachment 20 or (selectively) other respectively appropriate attachments (not shown). For combination, in the present case a joint part 21 of the attachment 20 is to be inserted into an orifice of the joint portion 11 and rotated therein. Thereby, a movable mechanical transfer element 14 of the base component 10, which transfer element 14 is partially arranged within the orifice of the joint portion 11, is moved relative to the housing 18.

To accomplish the movement of the transfer element 14, an edge 22 of the attachment 20 has a profile, which in the present case comprises indents p₁, p₂ as profile elements and which is configured to engage with the movable transfer element 14 of the base component 10 when this is being combined with the attachment 20.

When the base component 10 is thus combined with the attachment, a clutch component 13 of the base component 10 is coupled with a respective clutch element (not visible in Figure 1) of the attachment 20. Thereby, an electric motor comprised by a drive unit 12 of the base component 10 is enabled to actuate the attachment, which in the present example comprises driving a tool (not shown) such as a knife component comprised by the attachment 20 and rotatable about a longitudinal axis X of the attachment. An electronics 16 of the base component is configured to control the operation of the base component 10 and, therewith, how the attachment 20 is respectively actuated.

A detection unit 15 is configured to detect said movement of the transfer element 14. Preferably, the base component is configured to actuate the attachment based on the such detected movement. In particular, a microcontroller 16a included in said electronics 16 may be configured to receive (in particular, to read out) the detected movement, and to control the attachment's actuation (preferably responsive to user action, such as a switch-on of the base component) based on the detected movement and in accordance with a respective program stored in the microcontroller.

A return mechanism 17 (which may comprise an elastic element such as a spring) is configured to return the transfer element 14 to a default position when the at least one attachment 20 is detached from the base component 10.

In the embodiment depicted, the indents p₁, p₂ are arranged diametrically opposite to each other with respect to the axis X. As a consequence, the attachment is adapted to be combined with the base component in two orientations, namely either such that the transfer element 14 is caught by indent p₁ or - turned about 180° with respect to the axis X - such that the transfer element 14 is caught by indent p₂. As the indents p₁, p₂ have different extensions in circumference direction, a rotation of the attachment relative to the base component (when they are being combined) causes different movements of the transfer element 14, dependent on a respective orientation of the attachment 20 relative to the base component 10. The detection unit 15 is preferably configured to distinguish the difference.

Preferably, the base component 10 is configured to establish at least one parameter of operation of the attachment 20 based on a respectively detected movement. For instance, a respective mode of operation, a performance, a power, a speed, and/or a time may be automatically effected by the base component, dependent on the orientation in which the attachment 20 is combined, by the user, with the base component 10.

Disclosed is a base component 10 of a household appliance 100. The base component is configured to be detachably combined with at least one attachment 20, and to actuate the attachment when combined therewith. It comprises at least one transfer element 14 configured to be at least partially moved by the attachment when this is being combined with the base component 10, and a detection unit 15 configured to detect a respective movement of the at least one transfer element 14.

Further disclosed are an attachment 20 for detachable combination with a base component 10 of a household appliance 100. At least one surface and/or edge 22 of the attachment has a profile configured to engage with a movable element 14 of the base component, so as to cause a movement thereof when the attachment is being combined with the base portion.

Moreover, a household appliance 100 is disclosed.

### Reference signs

- 10: base component
- 11: joint portion
- 12: drive unit
- 13: clutch component
- 14: transfer element
- 15: detection unit
- 16: electronic
- 16a: microcontroller
- 17: return mechanism
- 18: housing

- 20: attachment
- 21: joint part
- 22: edge

- 100: household appliance
- p₁, p₂: indent
- X: longitudinal axis

## Claims

1. Base component (10) of a household appliance (100), the base component configured to be detachably combined with and actuate at least one attachment (20) of the household appliance, and comprising
- at least one transfer element (14) configured to be moved by the attachment (20) when this is being combined with the base component (10); and
- a detection unit (15) configured to detect a respective movement of the at least one transfer element (14).

2. Base component according to claim 1, wherein the detection unit (15) is configured to distinguish at least two different movements of the at least one transfer element (14).

3. Base component according to one of claims 1 or 2, wherein the base component (10) is configured to actuate the at least one attachment (20), when combined therewith, based on the respectively detected movement.

4. Base component according to one of the preceding claims, wherein the detection unit (15) comprises one or more switch/es configured to be activated by the moving at least one transfer element (14).

5. Base component according to one of the preceding claims, wherein the detection unit (15) is at least partially mounted to a microcontroller of the base component, at least partially placed on a dedicated printed circuit board and/or at least partially moulded into plastic.

6. Base component according to one of the preceding claims, further comprising a return mechanism (17) configured to return the transfer element (14) to a default position when the at least one attachment (20) is detached from the base component (10).

7. Attachment (20) for a household appliance (100), the attachment configured to be detachably combined with a base component (10) of the household appliance, wherein at least one surface and/or at least one edge (22) of the attachment (20) has a profile configured to engage with a movable element of the base component (10), so as to cause a movement of the movable element when the attachment (20) is being combined with the base portion (10).

8. Attachment according to claim 7, wherein the attachment (20) is adapted to be combined, with the base component (10), in a respectively selected one of two or more orientations relative to the base component.

9. Attachment set comprising at least two attachments (20) configured to be comined with a same base component of a household appliance, wherein at least a first one of the attachments is according to one of claims 7 or 8, and wherein
- at least a further one of the attachments is configured to keep the movable element of the base component fix when being combined with the base component, and/or
- at least a second one of the attachments is according to one of claims 7 or 8 and has a surface and/or edge with a profile configured to cause a different movement of the movable element than the profile of the first one of the attachments.

10. Household appliance (100) comprising
- a base component (10) according to one of claims 1 to 6, and
- an attachment (20) according to one of claim 7 or 8, or an attachment set according to claim 9, wherein the attachment/s (20) is/are respectively compatible for combination with the base component (10).
